# EUROPEAN PATENT SPECIFICATION

(11) **EP 0 813 952 B1**
(45) Date of publication and mention of the grant of the patent: **29.05.2002**
(21) Application number: 97304289.8
(22) Date of filing: 19.06.1997
(51) Int. Cl.: B29D 30/26, B29D 30/20

(54) **Method and apparatus for manufacturing a tyre**
Verfahren und Vorrichtung zur Herstellung von Luftreifen
Procédé et dispositif de fabrication de bandages pneumatiques

(30) Priority: 21.06.1996 JP 18151696; 24.06.1996 JP 18398796; 24.06.1996 JP 18398896; 20.01.1997 JP 2217597
(43) Date of publication of application: 29.12.1997
(73) Proprietor: SUMITOMO RUBBER INDUSTRIES LIMITED, Kobe-shi, Hyogo-ken (JP)
(72) Inventor: Sakamoto, Masayuki, Shirakawa-shi, Fukushima (JP); Mizuta, Takuya, Shirakawa-shi, Fukushima (JP); Yamada, Seiki, Shirakawa-shi, Fukushima (JP); Suzuki, Kazuya, Shirakawa-shi, Fukushima (JP); Tanaka, Susumu, Shirakawa-shi, Fukushima (JP); Endo, Yukio, Shirakawa-shi, Fukushima (JP); Omokawa, Toshihiko, Iwase-gun, Fukushima (JP)
(74) Representative: Stewart, Charles Geoffrey

(56) References cited:
- EP-A- 0 633 130
- FR-A- 2 304 465
- US-A- 3 926 704
- US-A- 4 366 019
- PATENT ABSTRACTS OF JAPAN vol. 007, no. 009 (M-185), 14 January 1983 & JP 57 167239 A (SUMITOMO GOMU KOGYO KK), 15 October 1982

## Description

This invention relates to a method and an apparatus for manufacturing a tyre.

In a general method for manufacturing a tyre, as disclosed in EP 633130 A2 a tread ring building drum arranged to provide a tread ring comprises segments arranged in a circumferential way and which may be reciprocated in a radial direction to hold and carry a tread ring from the tread ring building drum to a green tyre building drum. At the green tyre building drum the tread ring and carcass are united together to form a green tyre which is subsequently vulcanised.

If a green tyre has RRO (Radial Runout, i.e. vertical deviation from circularity), RRO still exists after the tyre is vulcanised, and the product lacks uniformity so that the rigidity of the tyre is uneven and reaction force when running on the road fluctuates due to the deviation from circularity.

It is therefore an object of the present invention to provide a method and an apparatus for manufacturing a tyre wherein a tyre of good uniformity is manufactured.

Accordingly, one aspect of the present invention provides a method for manufacturing a tyre in which a transfer ring comprising segments carries a tread ring to a green tyre building drum and said green tyre building drum unites said tread ring and a carcass ply to form a green tyre, characterised in that the deviation from circularity of said green tyre while the green tyre is on said green tyre building drum is measured and the deviation is used to shape the tread ring assembly.

Preferably the transfer ring segments control the shaping. This may be by the pressure applied by each segment or by the time of release of each segment holding the tread ring.

Another aspect of the invention provides an apparatus for manufacturing a tyre comprising a green tyre building drum, for uniting a tread ring and a carcass ply to form a green tyre and a transfer ring for holding and carrying the tread ring to the building drum, characterised by means for measuring the vertical deviation of said green tyre from circularity while the green tyre is clamped on the green tyre building drum; and means for correcting the green tyre into circularity according to the measured deviation.

The present invention will be described by way of example only, with reference to the accompanying drawings, in which:
Figure 1 is a block diagram showing a first apparatus for a tyre;
Figure 2A is a waveform chart;
Figure 2B is a waveform chart;
Figure 3 is a general view of the apparatus for manufacturing a tyre;
Figure 4 is a schematic side view of a principal portion of the apparatus for manufacturing a tyre;
Figure 5 is a schematic illustration showing a stitcher wheel;
Figure 6 is a schematic illustration showing movement of the stitcher wheel;
Figure 7 is a schematic illustration showing a stitcher apparatus;
Figure 8 is a schematic illustration of a tread ring forming drum;
Figure 9 is a flowchart;
Figure 10 is a block diagram showing a second apparatus for manufacturing a tyre;
Figure 11A is a waveform chart;
Figure 11B is a waveform chart;
Figure 12 is a flowchart;
Figure 13 is a block diagram showing a third apparatus for manufacturing a tyre;
Figure 14A is a waveform chart;
Figure 14B is a waveform chart;

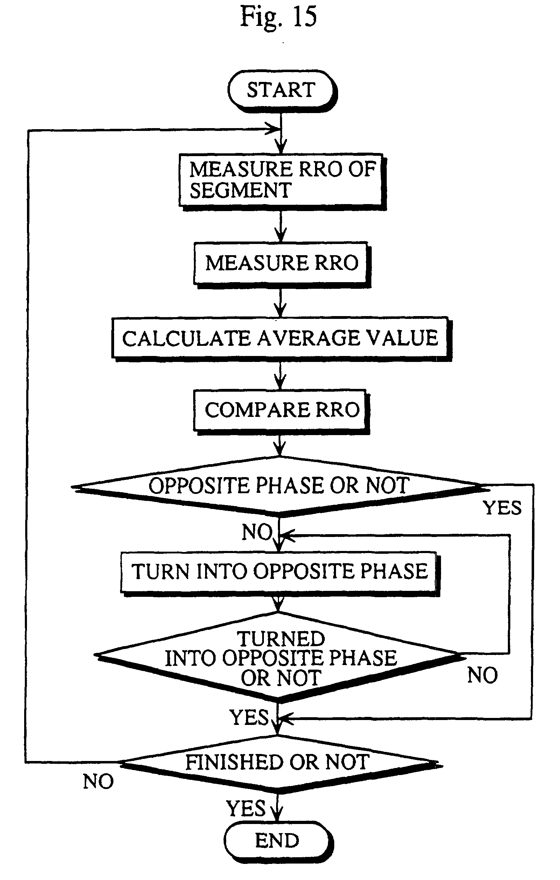

figure 15 is a flowchart;
Figure 16 is a block diagram showing. a fourth apparatus for manufacturing a tyre;
Figure 17A is a waveform chart;
Figure 17B is a waveform chart; and
Figure 18 is a flowchart.

Preferred embodiments of the present invention will now be described with reference to the accompanying drawings.

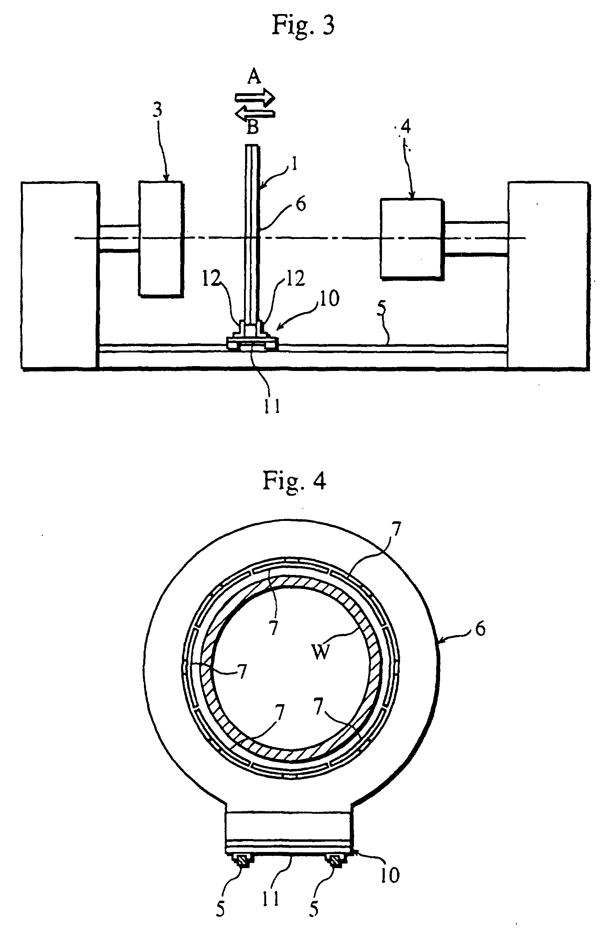

Figure 3 shows an apparatus for manufacturing a tyre according to the present invention, and this apparatus for manufacturing a tyre is provided with a tread ring forming drum 3, a green tyre building drum (a raw tyre forming drum) 4 facing the tread ring forming drum 3, and a transfer ring provided between the tread ring forming drum 3 and the green tyre building drum 4. This transfer ring 1 can be reciprocated along a rail 5 toward arrows A and B by means of a driving apparatus not shown in the attached drawings.

A belt, bandage and a tread strip are assembled together shaped as a ring, so that a cylindrical tread ring W (see Figure 4) is formed. As shown in Figure 8, the tread ring forming drum 3 comprises segments 2 arranged in a circumferential direction at regular intervals, and the segments 2 may freely reciprocate in a radial direction.

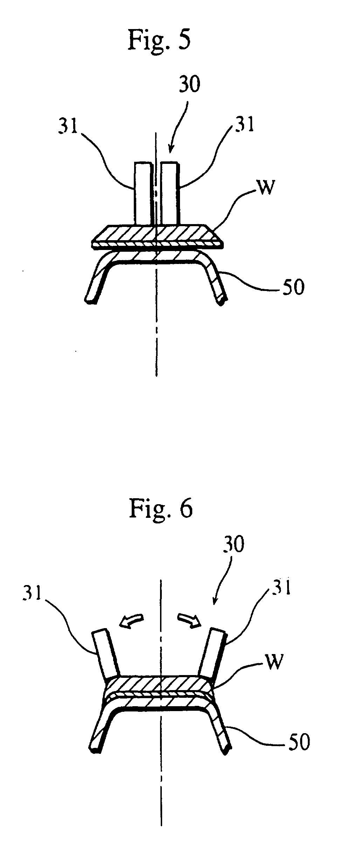

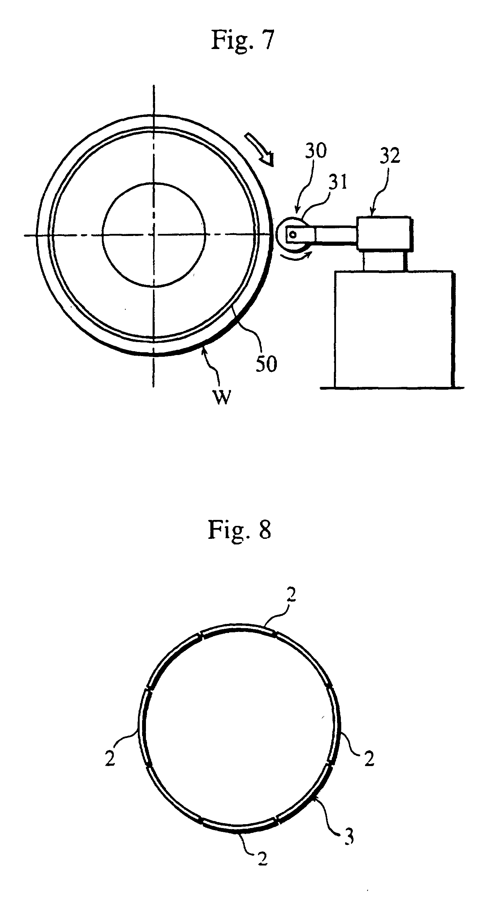

The tread ring W formed by the tread ring forming drum 3 is taken from the tread ring forming drum 3 using the transfer ring 1 and is carried to its green tyre building drum 4. On the green tyre building drum 4 the tread ring W and a carcass 50 (see Figure 5) are assembly together to form a green tyre (a raw tyre). In other words, the tread ring W sent to the green tyre building drum 4 is stuck to the surface of the carcass ply and consolidated by a stitcher apparatus 30 as shown in Figure 5 and 7, and a finished green tyre is formed.

The stitcher apparatus 30 is provided with a pair of stitcher wheels (rollers) 31 which freely rotate and a cylinder 32 which reciprocates the stitcher wheels 31 in the direction towards and away from the drum 4. The stitcher wheels 31 move from a central portion of an outer circumferential face of the tread ring W toward a marginal edge portion of the outer circumferential face as shown by the arrows in Figure 6.

Along with rotation of the drum 4, the stitcher wheels 31 rotate on their edges and are moved from the central portion of the outer circumferential face of the tread ring W to the marginal edge portion of the outer circumferential face, and the tread ring W is thus pressed (stuck) to the carcass ply 50.

The transfer ring 1, as shown in Figure 4, comprises a circular frame 6, segments 7 arranged on the frame 6, and an expansion and contraction mechanism now shown which moves the segments 7 in a radial direction. The expansion and contraction mechanism is a mechanism, for example, a cylinder mechanism, which is known in public and conventionally used.

The circular frame 6 is mounted on a mounting 10 travelling along rails 5, and the mounting 10 comprises a base plate 11 and a fixing member 12 for fixing the circular frame 6 on the base plate 11.

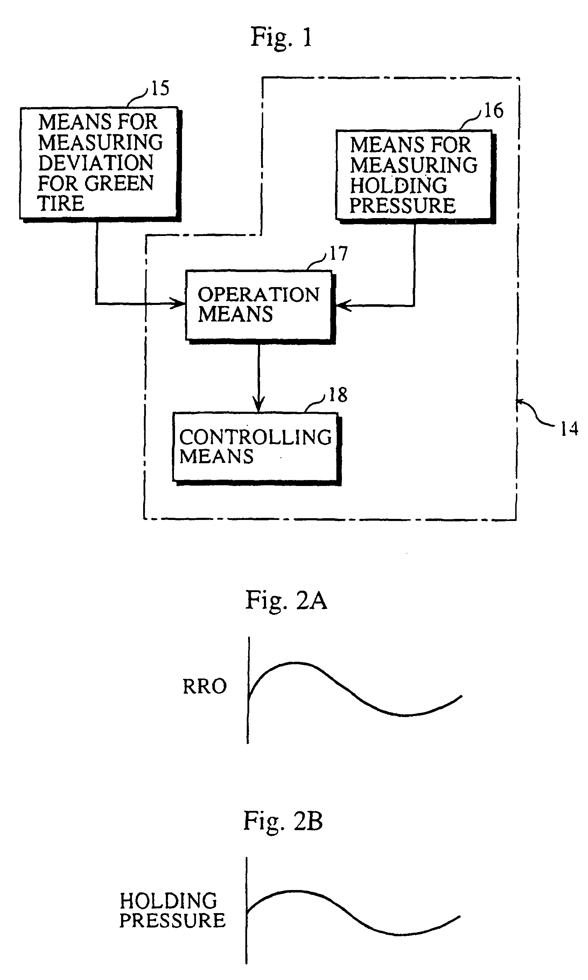

As shown in Figure 1, this apparatus for manufacturing a tyre possesses means 15 for measuring deviation for a green tyre which measures vertical deviation of the green tyre from circularity (RRO: Radial Runout) while the green tyre is clamped (inflated) on the green tyre building drum 4 and correcting means 14 for correcting the tyre into an accurate circle on the basis of the measured value. In this case, the correcting means 14 comprises means 16 for measuring the tread ring holding pressure of each segment 7 of the transfer ring 1, operation means 17 for comparing the measured deviation and the measured holding pressure for each tread ring, and controlling means 18 for arranging the pressure at which each segment 7 holds the tread ring on the basis of the value determined by the operation means 17.

The means 16 for measuring holding pressure comprises, for example, a pressure sensor (for example, a distortion gauge) attached to a face of the segment 7 which face faces the tread ring. The means 15 for measuring deviation may measure using the method for testing uniformity of a tyre prescribed by JASO (Japanese Automobile Standard Organisation), wherein an encoder detects a rotation angle input and distance is measured from a laser displacement meter every 45°. The outputs are fed into a personal computer. The controlling means 18 operates the above-mentioned expansion and contraction mechanism and changes the amount of expansion or contraction for each segment 7 on the basis of the holding pressure required by the operation means 17.

When the green tyre has a waveform (a primary waveform) of RRO as shown in Figure 2A, the tread ring holding pressure is arranged to have a waveform (a primary waveform) as shown in Figure 2B which corresponds to the primary waveform of RRO of the green tyre shown in Figure 2A. This is because the RRO of a tyre being manufactured is influenced by the tread ring holding pressure of each segment 7 of the transfer ring 1 and thus the RRO of the tyre to be manufactured is improved by controlling the tread ring holding pressures.

Next, using the apparatus for manufacturing a tyre composed as described above, a tyre is manufactured by the method explained below.

First, the tread ring forming drum is used to assemble a belt, a band, and a tread strip and to form a cylindrical tread ring W. Next, the tread ring W is taken by the transfer ring 1 to the green tyre building drum 4. At this stage, the means 16 for measuring the holding pressure measures the holding pressure at which each segment 7 holds the tread ring, and the measured value is inputted into the computer of the operation means 17.

Note that to assist removal of the tread ring W the tread ring W is held on its outer circumferential surface by the segments 7 of the transfer ring 1 and the diameter of the segments 2 of the tread ring forming drum 3 is shrunk.

Next, the tread ring W and a pre-assembled carcass ply 50 on the building drum 4 are united. The tyre is then inflated by the green tyre building drum 4, the RRO of the green tyre is measured by the means 15 for measuring deviation, and the measured value is inputted into the computer of the operation means 17.

The operation means 17 compares the values of the deviation and RRO and decides the holding pressures for the segments 7 of the transfer ring 1 in the next manufacturing process. That is to say, the RRO of the green tyre is improved by selectively changing the holding pressure, and this improved the RRO of the tyre after vulcanisation.

According to the operated value, the expanding and contracting amount of the segments 7 of the transfer ring 1 is changed by the controlling means 18, and each segment 7 is arranged to be held at the decided pressure.

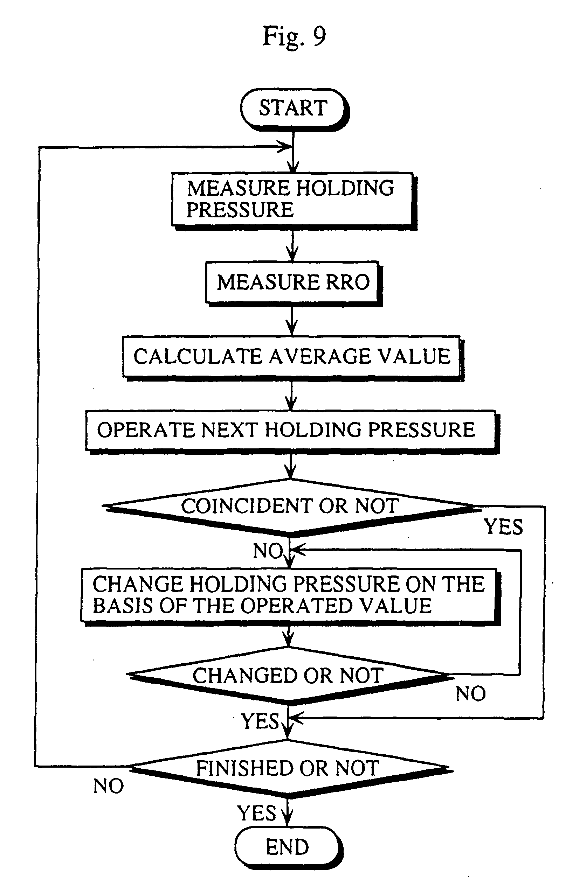

In more detail as explained with reference to the flow chart shown in Figure 9, first, the holding pressure is measured, next, RRO is measured, and at this stage, an average value of RROs measure several times is calculated. After that, a next holding pressure is operated from the holding pressure and the average RRO. If the measured holding pressure coincides with the next holding pressure, it is unnecessary to change the holding pressure, and if the measured pressure does not coincide with the next pressure, the holding pressure needs to be changed.

Next, whether the pressure was changed or not is judged, and if not changed, the holding pressure should be changed again according to the operated value. On the other hand, if the pressure was changed, whether the process is finished or not is judged. On the judgement if a process is finished, it is the end of the process. On the other hand if the process should be continued, the process is repeated from measuring the holding pressure.

The holding pressure is preferably between 1.0 kgf/cm² and 4.0 kgf/cm². The RRO is not sufficiently improved if the holding pressure is less than 1.0 kgf/cm², and if the pressure is above 4.0 kgf/cm², the green tyre deforms in some cases because an inflation internal pressure of the green tyre building drum is between 1.0 kgf/cm² and 2.0 kgf/cm².

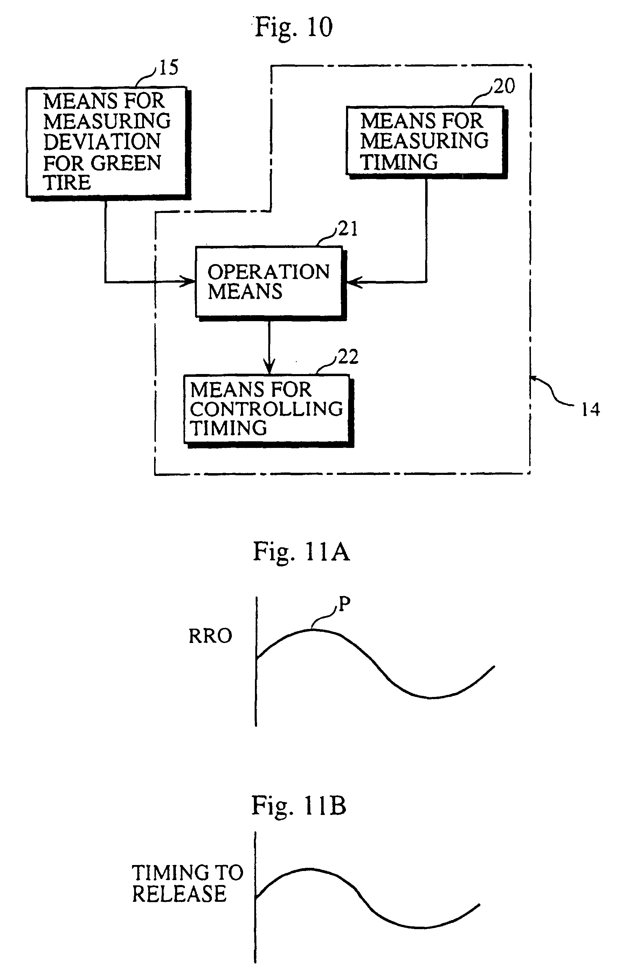

As shown in Figure 10, it is possible to arrange the correcting means 14 to posses means 20 for measuring the timing of each segment 7 of the transfer ring 1 to release the tread ring, operation means 21 for comparing the value of deviation measured by the means 15 for measuring deviation and the value measured by the means 20 for measuring timing and operating the next timing of each segment 7 to release the tread ring, and controlling means 22 for controlling timing of each segment to release the tread ring.

The means 20 for measuring timing is, for example, arranged to obtain change in value of a pressure sensor (for example, a distortion gauge) stuck on a face of the segment 7 which face faces the tread ring and to detect the timing to release on the basis of this change. The controlling means 22 operates the expansion and contraction mechanism described above and expands and contracts the segment 7 on the basis of the timing operated by the operation means 21.

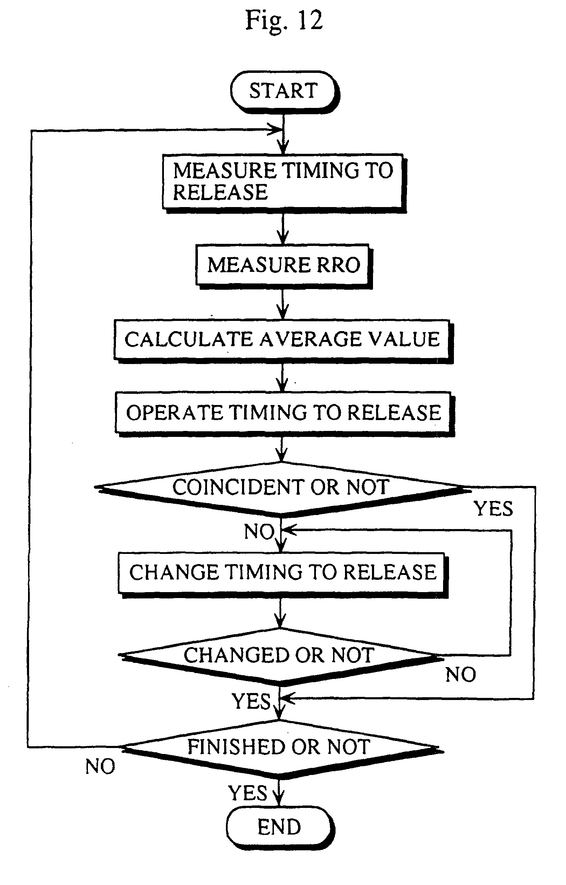

If the RRO of the green tyre has a waveform (a primary waveform) as shown in Figure 11A, the segment 7 is arranged to release at timing delayed from the peak P. of the waveform, or, as shown in Figure 11B, the waveform of releasing timing of the whole segments 7 is arranged to coincide with the primary waveform of RRO of the green tyre in Figure 11A. Because the RRO of the tyre being manufactured is influenced by the timing of release of each segment 7 of the transfer ring 1 the tyre to be manufactured is improved by controlling the timing to release the tread ring.

To manufacture a tyre using this apparatus first, the tread ring releasing timing of the segment 7 is measured by the means 20 for measuring timing, and the measured value is inputted into the operation means 21.

Next, when the green tyre building drum unites and inflates the tread ring W and the carcass ply 50, the means 15 for measuring deviation measures RRO of this green tyre, and the measured value is inputted into the operation means 21.

The operation means 21 compares and operates the value measured by the means 20 for measuring timing and the value measured by the means 15 for measuring deviation, and decides the timing of the segments 7 of the transfer ring 1 to release the tread ring in the next step. Thus the RRO of the green tyre is improved by changing this releasing timing, and this improves the RRO of the tyre after vulcanisation.

According to the decided value, the controlling means 22 changes the timing of the segments 7 of the transfer ring 1 to expand and contract, and each segment 7 releases the tread ring at the decided time.

With reference to the flowchart shown in Figure 12, first, releasing timing is measured, next, RRO is measured, and at this stage, an average value of RROs measured several times is calculated. After that, next releasing timing is operated from the releasing timing and the average RRO. If the measured releasing timing coincides with the next releasing timing, it is not necessary to change the release timing, and if the measured timing does not coincide with the next timing, the release time needs to be changed.

Next, whether the release timing was changed or not is judged, and if not changed, the timing needs to be changed again according to the operated value. On the other hand, if the timing was changed, whether the process is finished or not is judged. On the judgement if the process is finished, this is the end of the process. On the other hand if the process should be continued, the process is repeated from measuring the release timing.

The segment 7 returns within a time lag of 3 seconds because RRO does not change and loss of time is increased if the time lag is above 3 seconds.

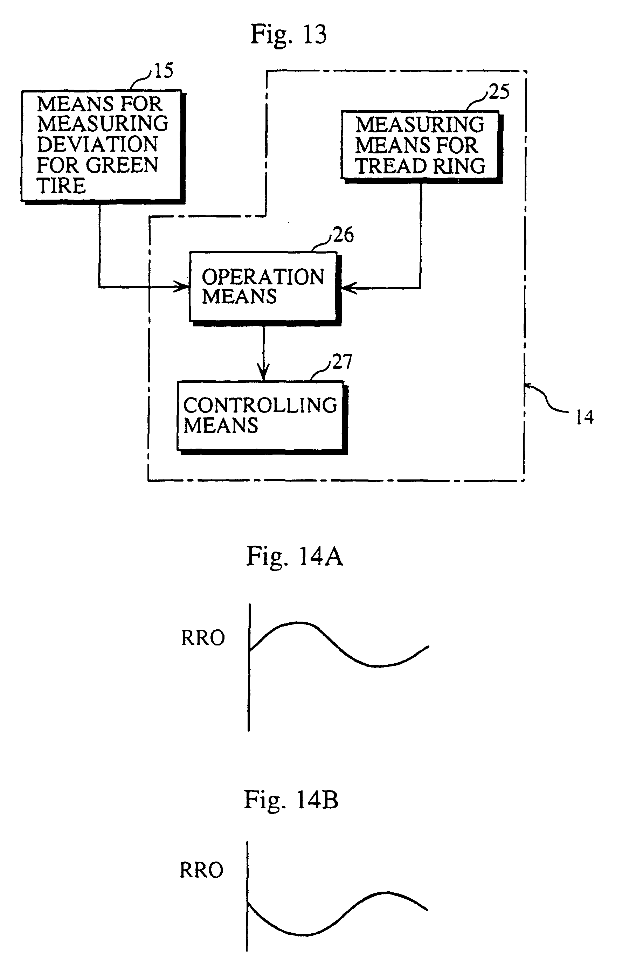

The correcting means 14 can be provided, as shown in Figure 13, with operation means 26 and controlling means 27, wherein the operation means 26 compares and operates a difference between a waveform which is in opposite phase again a waveform of a vertical deviation of the green tyre and a waveform of a measured vertical deviation of the segment and the controlling means 27 controls the contraction and expansion in a radial direction of the segment 2 of the tread ring forming drum 3 and arranges the waveform of the vertical deviation of the segment to be in opposite phase of the waveform of the vertical deviation of the green tyre.

The measuring means 25 for the tread ring measures a distance from an axis (a centre) to the segment 2, and comprises a displacement sensor such as a laser displacement meter or a differential transformer. Furthermore, the controlling means 27 operates the above-mentioned expansion and contraction mechanism and expands and contracts the segment 2 on the basis of the waveform phase determined by the operation means 26.

When the waveform (the primary waveform) of RRO of the green tyre is the waveform shown in Figure 14A, the waveform of RRO of the tread ring is arranged to be the waveform shown in Figure 14B, or, data of RRO of the green tyre is analysed upon occasion in order to form the tyre under an appropriate condition.

A tyre is manufactured using this apparatus for manufacturing a tyre as follows. The measuring means 25 for the tread ring measures the RRO of the tread ring of the segments 2 of the tread ring forming drum 3, and the measured value is inputted into the operation means 26. Next, this tread ring W is taken out by the transfer ring 1, and is sent to the green tyre building drum 4.

Then, when the green tyre building drum 4 unites and inflates the tread ring W and the carcass ply 50, the means 15 for measuring deviation for green tyre measures the RRO of this green tyre, and the measured value is inputted into the operation means 26.

The operation means 26 compares and determines a difference between a waveform which is in opposite phase against a waveform of a vertical deviation of the green tyre and a waveform of a vertical deviation of the segment on the basis of the value measured by the measuring means 25 for the tread ring and the value measured by the means 15 for measuring deviation for the green tyre, and according to the determined values, the controlling means 27 sets the expanding and contracting amounts of the segments 2 of the tread ring forming drum 3. Thus the RRO of the green tyre is improved by changing to a waveform of opposite phase, and this improved the RRO of the tyre after vulcanisation. At this stage, it is necessary to control the whole circumferential length of the segments 2 to be constant while the tread ring is formed.

With reference to the flowchart shown in Figure 14, first, the RRO of the segments 2 of the tread ring forming drum 3 is measured, then the RRO of the green tyre is measured, and at this stage, an average value of RROs of the green tyre measured several times is calculated. After that, the waveform of RRO of the segments 2 is turned into opposite phase of a waveform of RRO of the green tyre on the basis of the RRO of the segments 2 and the average RRO of the green tyre. If the waveform of the RRO of the segments 2 is turned into opposite phase, it is not necessary to change the phase, and if not, the phase needs to be changed.

Next, whether the phase was changed or not is judged, and if not changed, the phase needs to be changed again, according to the RRO of the segments and the average RRO of the green tyre. On the other hand if the phase was changed, whether the process is finished or not is judged. On this judgement if the process is finished, this is the end of the process. On the other hand if the process should be continued, the process is repeated from measuring RRO of the segment.

It is possible to control the green tyre to be formed under an appropriate condition by measuring the waveform of RRO of the green tyre on the green tyre building drum 4 immediately after the green tyre is formed and controlling the segments 2 of the tread ring forming drum to be in opposite' phase of this average waveform, or, by analysing data of the RRO of the segments 2 and the RRO of the green tyre upon occasion.

The segments 2 of the tread ring forming drum 3 move in a range of 3 mm because a protrusion of the green tyre turns into a depression and the RRO deteriorates if the range is above 3 mm.

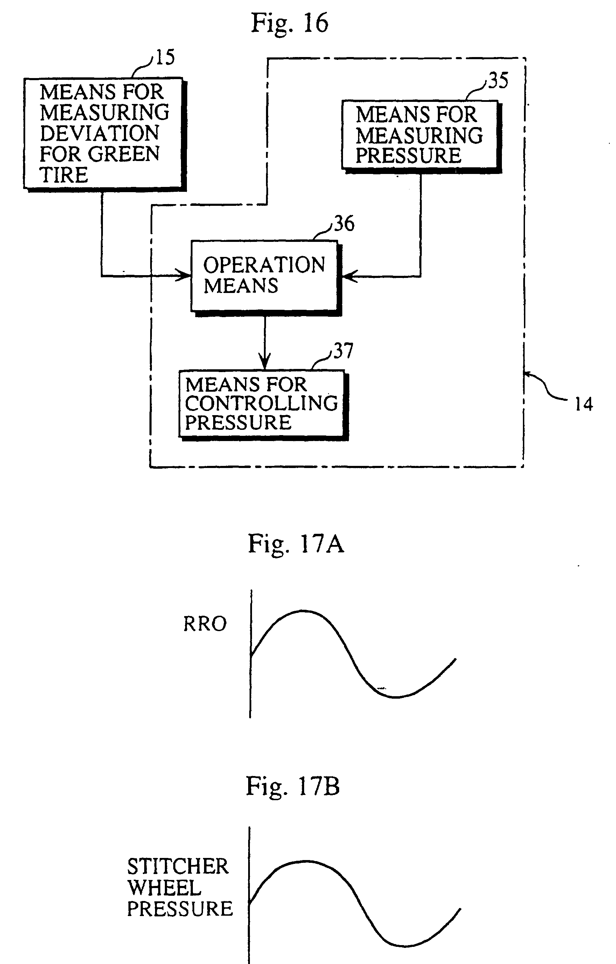

The correcting means 14 can be provided by, as shown in Figure 16, means 35 for measuring the pressure of the stitcher wheel 31, operation means 36 for comparing the value measured by the means 15 for measuring deviation and the value measured by the means 35 for measuring pressure and deciding the next pressure, and means 37 for controlling pressure of the stitcher wheel on the basis of the value operated by the operation means 36. The means 35 for measuring pressure comprises, for example, an air pressure gauge.

When the waveform (the primary waveform) of RRO of the green tyre is the waveform shown in Figure 17A, the pressure of the stitcher wheel is arranged to be the waveform shown in Figure 17B, which coincides with the primary waveform of RRO of the green tyre shown in Figure 17A.

A tyre is manufactured using this apparatus for manufacturing a tyre as follows. The means 35 for measuring pressure measured the pressure of the stitcher wheel 31, and the measured value is inputted into the operation means 36. When the tread ring W and the carcass ply 50 are united and inflated, the means 15 for measuring deviation measures the RRO of this green tyre, and the measured value is inputted into the operation means 36.

The operation means 36 compares and operates the value measured by the means 35 for measuring pressure and the value measured by the means 15 for measuring deviation and decides the next pressure.

According to the operated value, the controlling means 37 changes (controls) the pressure of the stitcher wheel 31 along the circumferential direction. The stitcher wheel presses within a range from 0.3 to 3.0 kgf/cm². When the pressure is leas than 0.3 kgf/cm², the stitcher does not work well, and when the pressure is above 3.0 kgf/cm², the RRO deteriorates because the tread expands and wrinkles.

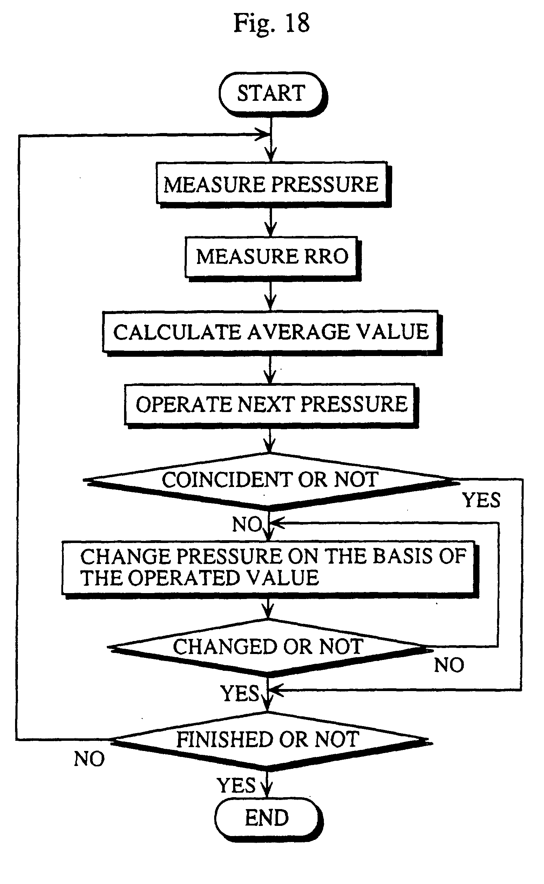

With reference to the flowchart shown in Figure 18, first, a pressure is measured, next, RRO is measured, and at this stage, an average value of the RROs measured several times is calculated. After that, the next pressure is operated from the pressure and the average RRO. If the measured pressure coincides with the next pressure, it is not necessary to change the pressure, and if not, the pressure needs to be changed.

Next, whether the pressure was changed or not is judged, and if not changed, the pressure needs to be changed again, according to the operated value. On the other hand if the pressure was changed, whether the process is finished or not is judged on the judgement if the process is finished, this is the end of the process. On the other hand if the process should bed continued, the process is repeated from measuring the pressure.

The green tyre to be formed thereby becomes a complete circle by control of the pressure.

Instead of controlling the stitcher wheel pressure as described above, it is possible to stitch using a cylinder as illustrated in Figure 7 and change a pressure of the cylinder by controlling the position of the stitcher wheel 31.

Described below is Experimental Examples 1, 2, 3 and 4.

A tyre manufactured by using the apparatus for, manufacturing a tyre shown in Figure 1 as the Experimental Example 1 and a tyre manufactured by using a conventional apparatus were examined on RRO and other values, and the results are shown in Table 1.

**TABLE 1**

| | Conventional Example | Experimental Example 1 |
|---|---|---|
| RFV | 5.42 | 4.18 |
| LFV | 2.88 | 2.51 |
| CON | +2.10 | +1.73 |
| RRO | 0.79 | 0.40 |
| RRO of Green Tyre | 1.98 | 0.99 |

A tyre manufactured by using the apparatus for manufacturing a tyre shown in Figure 10 as the Experimental Example 2 and a tyre manufactured by using a conventional apparatus were examined on RRO and other values, and the results are shown in Table 2.

**TABLE 2**

| | Conventional Example | Experimental Example 2 |
|---|---|---|
| RFV | 5.42 | 4.62 |
| LFV | 2.88 | 2.78 |
| CON | +2.10 | +2.02 |
| RRO | 0.79 | 0.61 |
| RRO of Green Tyre | 1.98 | 1.54 |

A tyre manufactured by using the apparatus for manufacturing a tyre shown in Figure 13 as the Experimental Example 3 and a tyre manufactured by using conventional apparatus were examined on RRO and other values, and the results are shown in Table 3.

**TABLE 3**

| | Conventional Example | Experimental Example 3 |
|---|---|---|
| RFV | 6.38 | 5.99 |
| LFV | 2.91 | 2.76 |
| CON | +1.92 | +1.83 |
| RRO | 0.85 | 0.67 |
| RRO of Green Tyre | 2.55 | 2.01 |

A tyre manufactured by using the apparatus for manufacturing a tyre shown in Figure 16 as the Experimental Example 4 and a tyre manufactured by using a conventional apparatus were examined on RRO and other values, and the results are shown in Table 4.

**TABLE 4**

| | Conventional Example | Experimental Example 4 |
|---|---|---|
| RFV | 6.38 | 5.47 |
| LFV | 2.91 | 2.82 |
| CON | +1.92 | +0.53 |
| RRO | 0.85 | 0.74 |
| RRO of Green Tyre | 2.55 | 2.18 |

In Tables 1, 2, 3 and 4, RFV (Radial Force Variation) is a component in a direction of a load, LFV (Lateral Force Variation) is a component perpendicular to a rotating face, and CON (Conicity) is a horizontal force which is applied regardless of a direction of rotation.

The size of the tyres was 205/65R15, and 100 samples were made, and the uniformity examination method prescribed by JASO was used in each measurement.

The uniformity date of the tyres according to the present invention was obviously improved in comparison with the conventional method.

Therefore, the present invention provides a tyre of good uniformity with accuracy. Changing the holding pressure improves the RRO of the green tyre, and this improves the RRO of the tyre after vulcanisation. Changing the release timing improves the RRO of the green tyre, and this improves the RRO of the tyre after vulcanisation. Turning the waveform into one of opposite phase improves the RRO of the green tyre, and this improves the RRO of the tyre after vulcanisation. Changing the pressure of the stitcher wheel 31 improves the RRO of the green tyre, and this improves the RRO of the tyre after vulcanisation.

## Claims

1. A method for manufacturing a tyre in which a transfer ring comprising segments (7) carries a tread ring (W) to a green tyre building drum (4) and said green tyre building drum (4) unites said tread ring (W) and a carcass ply (50) to form a green tyre, **characterised in that** the deviation from circularity of said green tyre while the green tyre is on said green tyre building drum (4) is measured and the deviation is used to shape the tread ring assembly.

2. A method according to claims 1, **characterised in that** the deviation is used to shape the green tyre into a complete circle.

3. A method according to claim 1 or 2, **characterised in that** the deviation is used to control the shape of the tread ring (W) by means of the transfer ring segments (7).

4. A method according to claim 3, **characterised in that** the pressure at which each segment (7) of the transfer ring (1) holds the tread ring (W) is measured; the vertical deviation of the green tyre from circularity is measured while the green tyre is clamped on said green tyre building drum (4); and the next pressure of each segment (7) to hold the tread ring (W) is determined by comparing the measured deviation and the measured holding pressure; and the pressure at which each segment (7) holds the tyre ring (W) is set according to the operated pressure.

5. A method according to claim 3, **characterised in that** the timing at which each segment (7) of said transfer ring (1) releases the tread ring (W) is measured; the vertical deviation of said green tyre from circularity while the green tyre is clamped by said green tyre building drum (4) is measured; the next timing of the release of each segment (7) of the tread ring (W) is determined by comparing the measured deviation and the measured timing; and the timing of release of each segment (7) of the tread ring (W) is done at the predetermined timing.

6. A method according to claim 3, **characterised in that** the vertical deviation from circularity of the segments (2) of the tread ring forming drum (3) is measured; the vertical deviation of the green tyre from circularity while the green tyre is clamped by said green tyre building drum (4) is measured; and expanding and contracting in a radial direction of the segments (2) of the tread ring forming drum (3) to arrange a waveform of the vertical deviation of the segments (2) in opposite phase to the waveform of the vertical deviation of the green tyre so that the next tread ring (W) is circular.

7. A method according to any of claims 1 to 6, **characterised in that** the vertical deviation of said green tyre from circularity while the green tyre is clamped by said green tyre building drum (4) is measured and the deviation is utilised to control the pressure of a stitcher wheel (31) which is used to unite the tread ring (W) and the carcass ply (50) in order to shape the green tyre to be formed into a complete circle.

8. An apparatus for manufacturing a tyre according to any of claims 1 to 7, comprising a green tyre building drum (4), for uniting a tread ring (W) and a carcass ply (5) to form a green tyre and a transfer ring (1) for holding and carrying the tread ring (W) to the building drum (4), **characterised by** means (15) for measuring the vertical deviation of said green tyre from circularity while the green tyre is clamped on the green tyre building drum (4); and means (14) for correcting the green tyre into circularity according to the measured deviation.

9. An apparatus according to claim 8, **characterised by** means (16) for measuring the pressure at which each segment (7) of said transfer ring (1) holds the tread ring (W); operation means (17) for comparing the deviation measured by the means (15) for measuring deviation and the pressure measured by the means (16) for measuring pressure and operating a next pressure at which each segment (7) holds the tread ring (W); and means (18) for controlling the pressure at which each segment (7) holds the tread ring (W) according to the pressure operated by the operation means (17).

10. An apparatus according to claim 8, **characterised by** means (20) for measuring the time at which each segment (7) of said transfer ring (1) releases the tread ring (W); operation means (21) for comparing the deviation measured by the means (15) for measuring deviation and the timing measured by the means (2) for measuring timing and operating a next timing at which each segment (7) releases the tread ring (W); and means (22) for controlling timing of each segment (7) to release the tread ring (W) to coincide with predetermined timing according to the timing operated by the operation means (21).

11. An apparatus according to claim 8, **characterised by** measuring means (25) for tread ring for measuring the vertical deviation of the segments (2) from circularity while the tread ring forming drum (3) forms the tread ring (W); operation means (26) for comparing and operating the difference between a waveform which is in opposite phase of a waveform of said vertical deviation of the green tyre and a waveform of said vertical deviation of the segments (2); and means (27) for controlling the expansion and contraction in a radial direction of the segments (2) of the tread ring forming drum (3) according to the difference operated by said operation means (26) in order to arrange the waveform of the vertical deviation of the segments (2) to be in opposite phase of the waveform of the vertical deviation of the green tyre.

12. An apparatus according to any of claims 8 to 11, **characterised by** means (35) for measuring the pressure of the stitcher wheel (31); operation means (36) for comparing the deviation measured by the means (15) for measuring deviation and the pressure measured by the means (35) for measuring pressure and deciding a next pressure; and means (37) for controlling pressure of said stitcher wheel (31) according to the pressure operated by the operation means (36) in order to shape the green tyre to be formed into a complete circle.

## Patentansprüche

1. Verfahren zum Herstellen eines Reifens, bei dem ein Segmente (7) umfassender Übertragungsring einen Laufstreifenring (W) zu einer Rohreifen-Aufbautrommel (4) überträgt und die Rohreifen-Aufbautrommel (4) den Laufstreifenring (W) und eine Karkasslage (50) zur Bildung eines Rohreifens vereinigt, **dadurch gekennzeichnet, dass** die Abweichung des Rohreifens von der Kreisförmigkeit gemessen wird, während der Rohreifen sich an der Rohreifen-Aufbautrommel (4) befindet, und diese Abweichung zum Formen der Laufstreifenring-Anordnung benutzt wird.

2. Verfahren nach Anspruch 1, **dadurch gekennzeichnet, dass** die Abweichung zum Formen des Rohreifens zu einem vollständigen Kreis benutzt wird.

3. Verfahren nach Anspruch 1 oder 2, **dadurch gekennzeichnet, dass** die Abweichung zum Steuern der Form des Laufstreifenrings (W) mittels der Übertragungsring-Segmente (7) benutzt wird.

4. Verfahren nach Anspruch 3, **dadurch gekennzeichnet, dass** der Druck, mit dem jedes Segment (7) des Übertragungsrings (1) den Laufstreifenring (W) hält, gemessen wird; die vertikale Abweichung des Rohreifens von der Kreisförmigkeit gemessen wird, während der Rohreifen an der Rohreifen-Aufbautrommel (4) geklemmt ist; und der nächste Druck jedes Segments (7) zum Halten des Laufstreifenrings (W) durch Vergleichen der gemessenen Abweichung und des gemessenen Haltedruckes bestimmt wird; und der Druck, mit dem jedes Segment (7) den Laufstreifenring (W) hält, entsprechend dem bearbeiteten Druck eingestellt wird.

5. Verfahren nach Anspruch 3, **dadurch gekennzeichnet, dass** die Zeitgabe gemessen wird, bei der jedes Segment (7) des Übertragungsrings (1) den Laufstreifenring (W) löst; die vertikale Abweichung des Rohreifens von der Kreisförmigkeit gemessen wird, während der Rohreifen durch die Rohreifen-Aufbautrommel (4) geklemmt wird; die nächste Zeitgabe des Lösens von jedem Segment (7) des Laufstreifenringes (W) durch Vergleichen der gemessenen Abweichung und der gemessenen Zeitgabe bestimmt wird; und die Zeitgabe des Lösens von jedem Segment (7) des Laufstreifenringes (W) entsprechend der vorgegebenen Zeitgabe vorgenommen wird.

6. Verfahren nach Anspruch 3, **dadurch gekennzeichnet, dass** die vertikale Abweichung von der Kreisförmigkeit der Segmente (2) der Laufstreifenring-Formungstrommel (3) gemessen wird; dass die vertikale Abweichung des Rohreifens von der Kreisförmigkeit gemessen wird, während der Rohreifen durch die Rohreifen-Aufbautrommel (4) geklemmt ist; und dass die Segmente (2) der Laufstreifenring Formungstrommel (3) in einer radialen Richtung gedehnt bzw. zusammengezogen werden, um eine Wellenform der vertikalen Abweichung der Segmente (2) in entgegengesetzter Phase zu der Wellenform der vertikalen Abweichung des Rohreifens einzurichten, so dass der nächste Laufstreifenring (W) kreisförmig ist.

7. Verfahren nach einem der Ansprüche 1 bis 6, **dadurch gekennzeichnet, dass** die vertikale Abweichung des Rohreifens von der Kreisförmigkeit gemessen wird, während der Rohreifen durch die Rohreifen-Aufbautrommel (4) geklemmt ist, und die Abweichung zum Steuern des Druckes einer zum Vereinigen des Laufstreifenringes (W) mit der Karkasslage (50) benutzten Heftrolle (31) verwendet wird, um den Rohreifen zur Formung zu einem vollständigen Kreis zu gestalten.

8. Vorrichtung zum Herstellen eines Reifens nach einem der Ansprüche 1 bis 7, die eine Rohreifen-Aufbautrommel (4) zum Vereinigen eines Laufstreifenringes (W) mit einer Karkasslage (5) zur Bildung eines Rohreifens und einen Übertragungsring (1) zum Halten und Übertragen des Laufstreifenringes (W) zu der Aufbautrommel (4) umfasst, **gekennzeichnet durch** Mittel (15) zum Messen der vertikalen Abweichung des Rohreifens von der Kreisförmigkeit, während der Rohreifen an der Rohreifen-Aufbautrommel (4) geklemmt ist; und Mittel (14), um den Rohreifen gemäß der gemessenen Abweichung zur Kreisförmigkeit zu korrigieren.

9. Vorrichtung nach Anspruch 8, **gekennzeichnet durch** Mittel (16) zum Messen des Druckes, mit dem jedes Segment (7) des Übertragungsrings (1) den Laufstreifenring (W) hält; Bearbeitungsmittel (17) zum Vergleichen der **durch** das Mittel (15) zum Messen der Abweichung gemessenen Abweichung mit dem **durch** das Mittel (16) zum Messen des Druckes gemessenen Druck und zum Bearbeiten des nächsten Druckes, mit dem jedes Segment (7) den Laufstreifenring (W) hält; und Mittel (18), um den Druck, mit dem jedes Segment (7) den Laufstreifenring (W) hält, gemäß dem **durch** das Bearbeitungsmittel (17) bearbeiteten Druck zu steuern.

10. Vorrichtung nach Anspruch 8, **gekennzeichnet durch** Mittel (20) zum Messen des Zeitpunkts, bei dem jedes Segment (7) des Übertragungsringes (1) den Laufstreifenring (W) löst; Bearbeitungsmittel (21) zum Vergleichen der **durch** das Mittel (15) zum Messen der Abweichung gemessenen Abweichung und der **durch** das Mittel (2) zum Messen der Zeitgabe gemessenen Zeitgabe und Bearbeiten der nächsten Zeitgabe, bei der jedes Segment (7) den Laufstreifenring (W) löst; und Mittel (22) zum Steuern der Zeitgabe jedes Segmentes (7), um den Laufstreifenring (W) zusammenfallend mit vorgegebener Zeitgabe gemäß der **durch** das Bearbeitungsmittel (21) bearbeiteten Zeitgabe zu lösen.

11. Vorrichtung nach Anspruch 8, **gekennzeichnet durch** Messmittel (25) für den Laufstreifenring zum Messen der vertikalen Abweichung der Segmente (2) von der Kreisformigkeit, während die Laufstreifenring-Formungstrommel (3) den Laufstreifenring (W) formt; Bearbeitungsmittel (26) zum Vergleichen und Bearbeiten der Differenz zwischen einer Wellenform, die sich in entgegengesetzter Phase zu einer Wellenform der vertikalen Abweichung des Rohreifens befindet, und einer Wellenform der vertikalen Abweichung der Segmente (2); und Mittel (27) zum Steuern des Dehnens und Zusammenziehens in radialer Richtung der Segmente (2) der Laufstreifenring-Formungstrommel (3) gemäß der **durch** das Bearbeitungsmittel (26) bearbeiteten Differenz, um die Wellenform der vertikalen Abweichung der Segmente (2) in entgegengesetzter Phase zu der Wellenform der vertikalen Abweichung des Rohreifens einzurichten.

12. Vorrichtung nach einem der Ansprüche 8 bis 11, **gekennzeichnet durch** Mittel (35) zum Messen des Druckes der Heftrolle (31); Bearbeitungsmittel (36) zum Vergleichen der **durch** das Mittel (15) zum Messen der Abweichung gemessenen Abweichung und des **durch** das Mittel (35) zum Messen des Druckes gemessenen Druckes, und Entscheiden über einen nächsten Druck; und Mittel (37) zum Steuern des Druckes der Heftrolle (31) gemäß dem **durch** das Bearbeitungsmittel (36) bearbeiteten Druck, um den Rohreifen derart zu gestalten, das ein vollständiger Kreis geformt wird.

## Revendications

1. Procédé de confection d'un pneumatique dans lequel un anneau de transfert comprenant des segments (7) porte un anneau (W) de bande de roulement sur un tambour (4) de confection de pneumatique non vulcanisé et le tambour (4) de confection de pneumatique non vulcanisé associe l'anneau de bande de roulement (W) et une nappe de carcasse (50) pour former un pneumatique non vulcanisé, **caractérisé en ce que** l'écart à la circularité du pneumatique non vulcanisé lorsque le pneumatique non vulcanisé se trouve sur le tambour (4) de confection du pneumatique non vulcanisé est mesuré et l'écart est utilisé pour la mise en forme de l'ensemble à anneau de bande de roulement.

2. Procédé selon la revendication 1, **caractérisé en ce que** l'écart est utilisé pour la mise en forme du pneumatique à l'état non vulcanisé à une configuration de cercle complet.

3. Procédé selon la revendication 1 ou 2, **caractérisé en ce que** l'écart est utilisé pour le réglage de la configuration de l'anneau de bande de roulement (W) à l'aide des segments (7) d'anneau de transfert.

4. Procédé selon la revendication 3, **caractérisé en ce que** la pression avec laquelle chaque segment (7) de l'anneau de transfert (1) maintient l'anneau de bande de roulement (W) est mesurée, l'écart vertical à la circularité du pneumatique non vulcanisé est mesuré lorsque le pneumatique non vulcanisé est serré sur le tambour (4) de confection de pneumatique non vulcanisé, et la pression suivante de chaque segment (7) destiné à maintenir l'anneau de bande de roulement (W) est déterminée par comparaison de l'écart mesuré et de la pression mesurée de maintien, et la pression à laquelle chaque segment (7) maintient l'anneau de pneumatique (W) est réglée d'après la pression de l'opération.

5. Procédé selon la revendication 3, **caractérisé en ce que** le temps auquel chaque segment (7) de l'anneau de transfert (1) libère l'anneau de bande de roulement (W) est mesuré, l'écart vertical à la circularité du pneumatique non vulcanisé lorsque le pneumatique non vulcanisé est serré par le tambour (4) de confection de pneumatique non vulcanisé est mesuré, le temps suivant de libération de chaque segment (7) de l'anneau de bande de roulement (W) est déterminé par comparaison de l'écart mesuré et du temps mesuré, et le temps de la libération de chaque segment (7) de l'anneau de bande de roulement (W) est déterminé au temps prédéterminé.

6. Procédé selon la revendication 3, **caractérisé en ce que** l'écart vertical à la circularité des segments (2) du tambour (3) de mise en forme de l'anneau de bande de roulement est mesuré, l'écart vertical à la circularité du pneumatique non vulcanisé lorsque le pneumatique non vulcanisé est serré sur le tambour (4) de confection de pneumatique non vulcanisé est mesuré, et les segments (2) du tambour (3) de mise en forme d'anneau de bande de roulement sont écartés et contractés en direction radiale afin que la forme d'onde de l'écart vertical des segments (2) dans la phase opposée à la forme d'onde de l'écart vertical du pneumatique non vulcanisé soit obtenue, si bien que l'anneau suivant de bande de roulement (W) est circulaire.

7. Procédé selon l'une quelconque des revendications 1 à 6, **caractérisé en ce que** l'écart vertical à la circularité du pneumatique non vulcanisé lorsque le pneumatique non vulcanisé est serré par le tambour (4) de confection de pneumatique non vulcanisé est mesuré, et l'écart est utilisé pour le réglage de la pression d'une roue (31) de couture qui est utilisée pour associer l'anneau de bande de roulement (W) et la nappe de carcasse (50) afin que le pneumatique non vulcanisé soit mis à la forme d'un cercle complet.

8. Appareil de confection d'un pneumatique selon l'une quelconque des revendications 1 à 7, comprenant un tambour (4) de confection de pneumatique vulcanisé destiné à associer un anneau de bande de roulement (W) et une bande de carcasse (5) pour la formation d'un pneumatique non vulcanisé, et un anneau de transfert (1) destiné à maintenir et transporter l'anneau de bande de roulement (W) vers le tambour de confection (4), **caractérisé par** un dispositif (15) de mesure de l'écart vertical à la circularité du pneumatique non vulcanisé lorsque le pneumatique non vulcanisé est serré sur le tambour (4) de confection de pneumatique non vulcanisé, et un dispositif (14) de correction de la circularité du pneumatique non vulcanisé en fonction de l'écart mesuré.

9. Appareil selon la revendication 8, **caractérisé par** un dispositif (16) de mesure de la pression avec laquelle chaque segment (7) de l'anneau de transfert (1) maintient l'anneau de bande de roulement (W), un dispositif de commande (17) destiné à comparer l'écart mesuré par le dispositif (15) de mesure de l'écart et la pression mesurée par le dispositif (16) de mesure de la pression est destiné à commander une pression suivante à laquelle chaque segment (7) maintient l'anneau de bande de roulement (W), et un dispositif (18) destiné à régler la pression avec laquelle chaque segment (7) maintient l'anneau de bande de roulement (W) en fonction de la pression commandée par le dispositif de commande (17).

10. Appareil selon la revendication 8, **caractérisé par** un dispositif (20) de mesure du temps auquel chaque segment (7) de l'anneau de transfert (1) libère l'anneau de bande de roulement (W), un dispositif de commande (21) destiné à comparer l'écart mesuré par le dispositif (15) de mesure de l'écart et le temps mesuré par le dispositif (2) de mesure de temps et à commander un nouveau temps auquel chaque segment (7) libère l'anneau de bande de roulement (W), et un dispositif (22) de commande du temps auquel chaque segment (7) libère l'anneau de bande de roulement (W) afin qu'il coïncide avec un temps prédéterminé en fonction du temps commandé par le dispositif de commande (21).

11. Appareil selon la revendication 8, **caractérisé par** un dispositif de mesure (25) de l'anneau de bande de roulement destiné à mesurer l'écart vertical des segments (2) par rapport à la circularité lorsque le tambour (3) de mise en forme d'anneau de bande de roulement forme l'anneau de bande de roulement (W), un dispositif de commande (26) destiné à comparer et commander la différence entre une forme d'onde qui a une phase opposée à la forme d'onde de l'écart vertical du pneumatique non vulcanisé et une forme d'onde de l'écart vertical des segments (2), et un dispositif (27) de commande de l'écartement et de la contraction en direction radiale des segments (2) du tambour (3) de mise en forme d'anneau de bande de roulement d'après la différence commandée par le dispositif de commande (26) afin que la forme d'onde de l'écart vertical des segments (2) présente une phase opposée à celle de la forme d'onde de l'écart vertical du pneumatique non vulcanisé.

12. Appareil selon l'une quelconque des revendications 8 à 11, **caractérisé par** un dispositif (35) de mesure de la pression de la roue de couture (31), un dispositif de commande (36) destiné à comparer l'écart mesuré par le dispositif (15) de mesure d'écart et la pression mesurée par le dispositif (35) de mesure de pression et à déterminer une pression suivante, et un dispositif (37) de réglage de la pression de la roue de couture (31) d'après la pression commandée par le dispositif de commande (36) afin que le pneumatique non vulcanisé soit mis à la forme d'un cercle complet.
